# EUROPEAN PATENT APPLICATION

(11) **EP 4 624 254 A1**
(43) Date of publication of application: **01.10.2025**
(21) Application number: 24166330.1
(22) Date of filing: 26.03.2024
(51) Int. Cl.: B60Q 1/068, B60Q 1/076, B60Q 1/10, B60Q 1/12, F21S 41/148, F21S 41/151, F21S 41/19, F21S 41/255, F21S 41/33, F21S 41/657, F21S 45/47, F21S 45/49, F21W 102/165

(54) **LIGHT UNIT OF A VEHICLE HEADLAMP MODULE**

(71) Applicant: PO LIGHTING CZECH s.r.o., 742 42 Senov u Nového Jicína (CZ)
(72) Inventor: JABUREK, Petr, 742 42 Senov u Nového Jicína (CZ); PAVLIK, Ivo, 742 42 Senov u Nového Jicína (CZ); MAKAM RAJENDRA, Nagendra, 742 42 Senov u Nového Jicína (CZ); RAPALA, Daniel, 742 42 Senov u Nového Jicína (CZ); CERNOCH, Jakub, 742 42 Senov u Nového Jicína (CZ)
(74) Representative: LLR

(57) **Abstract**

A light unit (1) for a vehicle headlamp module, said light unit (1) comprising emitting means to emit a first beam and a second beam (10), wherein said emitting means comprise, for each one of the first and second beams:
-a set of light emitting diodes for generating a light,
-a set of optical parts (5) for collimating the light emitted by the light emitting diodes,
-a support (12, 14) for holding the set of light emitting diodes and the set of optical parts (5), in a fixed position relative to one another,
and said emitting means also comprises:
-a set of focusing lenses (2) for converting the light into a first beam and a second beam (10), both aiming at an external target,
-a movable means for adjusting the vertical position of the supports (14, 15) relative to the set of focusing lens (2), the vertical direction being considered when the headlamp module is mounted on a vehicle,
characterized in that the support (14) of the second beam (10) is rotatable relative to the support (12) of the first beam, around an axis of rotation parallel to the vertical direction.

## Description

The technical field of the invention is vehicle lamp devices, and more specifically vehicle lamp devices with adjustable settings for direction of the beams.

A device disclosed in WO2022129617 comprises a light-emitting module for a motor vehicle, comprising at least one light-emitting assembly able to emit light rays and an optical system placed on a specific optical axis of the light-emitting module, crosswise to the light rays and configured to project a light beam, the at least one light-emitting assembly being placed in the vicinity of an object focal plane of the optical system. The optical system forms an element for closing the light-emitting module and the light-emitting assembly is mounted on a rotatable carrier that is rotated by a specific drive system independently of the optical system. An advantage of this device is its fixed optical system that can be visible from outside the vehicle and does not require a surrounding gap allowing to move it for beam orientation adjustment. The absence of a gap gives room to more disruptive designs regarding the front face of a car.

A drawback of the device disclosed in WO2022129617 is its lack of compacity. Another drawback is its inability to deal with anti-blinding adjustment. A lateral adjustment of the beam is still required, especially when the device includes a kink beam, i.e. a beam with a level of light projection higher on one side of the road than on the other side, to avoid blinding drivers coming from an opposite lane. More generally, this known device provides no solution when a light unit is able to generate at least two beam patterns that need individual adjustment.

The invention intends to overcome these problems.

An object of the invention is a light unit for a vehicle headlamp module, said light unit comprising emitting means to emit a first beam, for instance a regular beam, and a second beam, for instance a kink beam, wherein said emitting means comprise, for each one of the first and second beams:
- a set of light emitting diodes for generating a light,
- a set of optical parts for collimating the light emitted by the light emitting diodes,
- a support for holding the set of light emitting diodes and the set of optical parts, in a fixed position relative to one another,
and said emitting means also comprises:
- a set of focusing lenses for converting the light into a first beam and a second beam, both aiming at an external target,
- a movable means for adjusting the vertical position of the supports relative to the set of focusing lens, the vertical direction being considered when the headlamp module is mounted on a vehicle,
characterized in that the support of the second beam is rotatable relative to the support of the first beam, around an axis of rotation parallel to the vertical direction.

According to a particular embodiment of the light unit, at least one emitting means comprises a set of shields for filtering the light collimated by the optical parts, the set of shields being held on the support,

According to a particular embodiment of the light unit, the vertical axis of rotation is located in the vicinity of the focusing lenses.

According to a particular embodiment of the light unit, the support for the second beam is provided with setting means for setting its angular position around the axis of rotation relative to the support for the first beam.

According to a particular embodiment of the light unit, the setting means is a screw, optionally combined with a stepper motor or a servo motor (i.e. a motor with feedback of the position).

According to a particular embodiment of the light unit, the focusing lenses for the second beam and for the first beam are aligned along a horizontal direction, taken when the headlamp module is mounted on the vehicle.

According to a particular embodiment of the light unit, the first beam is a base beam.

According to a particular embodiment of the light unit, the first beam is a high beam.

According to a particular embodiment of the light unit, at least one of the supports comprises a heat sink, optionally combined with an air fan.

According to a particular embodiment of the light unit, the set of focusing lenses for the second beam is constituted of one single lens.

According to a particular embodiment of the light unit, the movable means comprise an axis of rotation parallel to a horizontal direction, taken when the headlamp module is mounted on the vehicle, said horizontal axis of rotation being common to the support for the second beam and to the support for the first beam.

According to a particular embodiment of the light unit, said horizontal axis of rotation is located in the vicinity of the focusing lenses.

According to a particular embodiment of the light unit, the support for the second beam and the support for the first beam are mechanically linked to move as one piece around the horizontal rotation axis.

According to a particular embodiment of the light unit, one of the supports for the second beam and for the first beam is provided with setting means for setting its angular position around the horizontal rotation axis.

According to a particular embodiment of the light unit, the setting means is a screw, optionally combined with a stepper motor.

### Brief description of the figures

The invention will be better understood with the non-limiting examples disclosed hereafter. Drawings illustrate these examples:
- figure 1 is a schematic perspective view of a structure according to one embodiment of the invention,
- figure 2 is another perspective view from direction II of the structure of figure 1,
- figure 3 is zoomed-in view of part III of figure 1,
- figures 4 is a side view along IV of figure 1,
- figures 5 is a front view along V of figure 1,
- figure 6 is a top view along VI of figure 1,

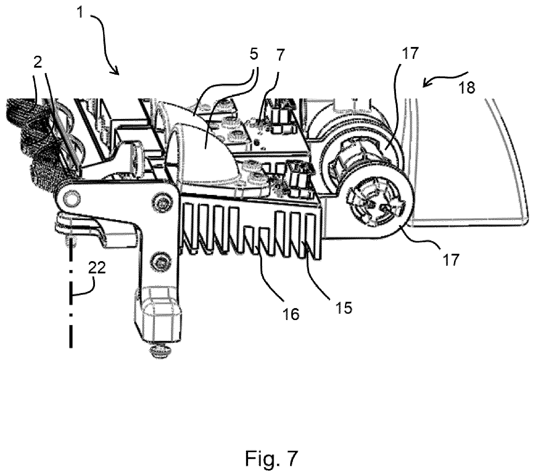

- figure 7 is a cross-sectioned perspective view along plane VII as shown in figure 6,
- figures 8-10 show three different positions of the light-emitting assemblies around the horizontal axis and the corresponding views of beams,
- figures 11, 12 show two different positions of the kink support and the corresponding views of the beams.

### Detailed Description

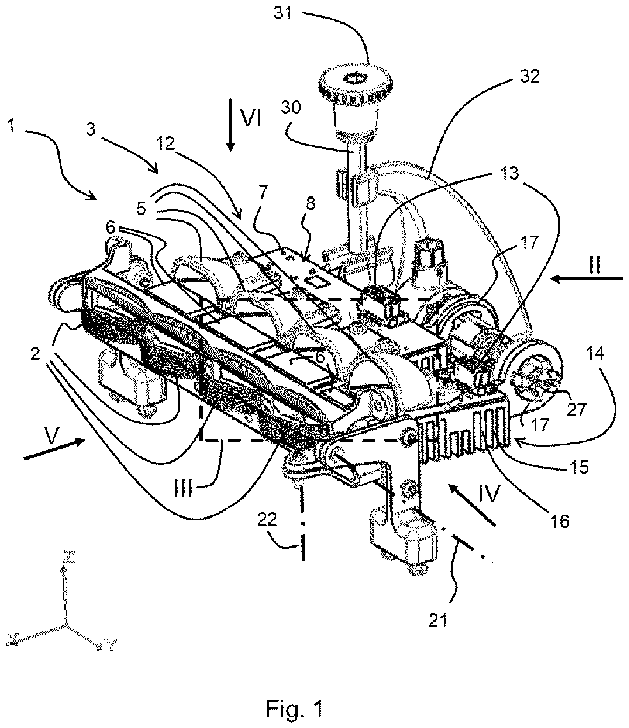

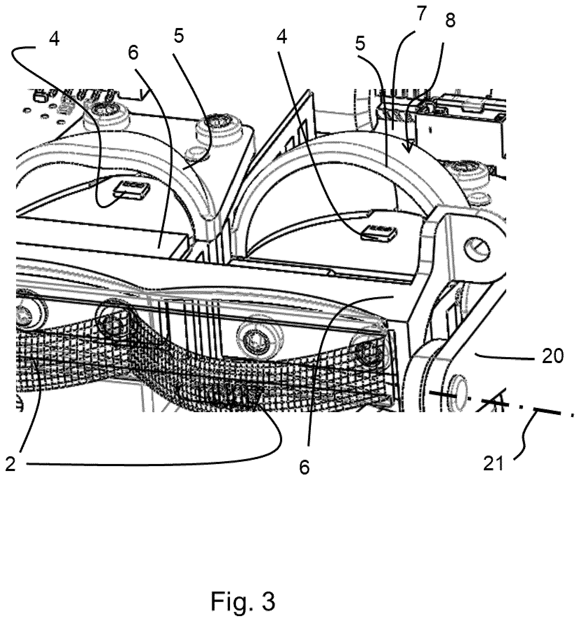

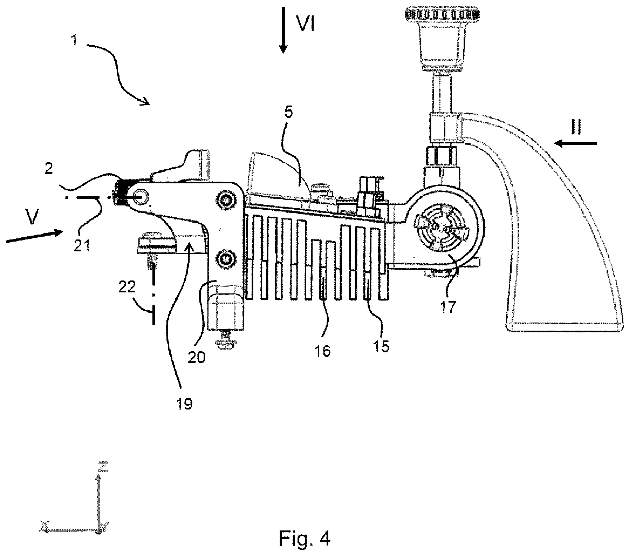

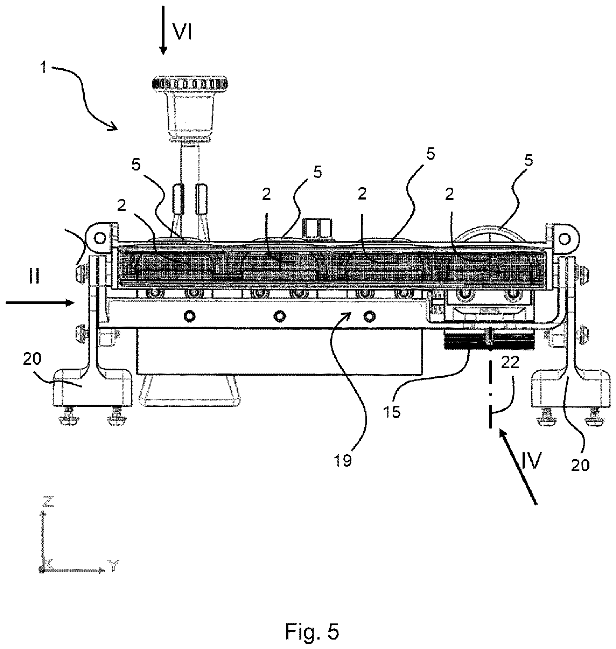

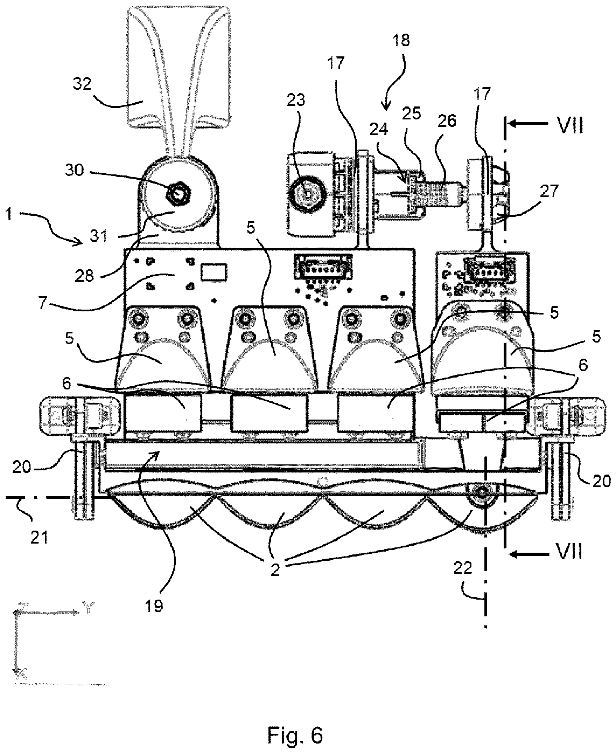

The light unit 1 represented as an example of embodiment of the invention on figure 1-6 comprises several blocks:
- an optical system made of four focusing lenses 2,
- two light-emitting assemblies 3, each made of one or more light emitting diodes (LED), one or more collimating mirrors 5 acting as collimators, one or more filtering mirrors 6 acting as optical filters.

The shape, size and type of each of the components as represented on the drawings are here given as non-limiting examples. Other shapes, sizes and types of equivalent means, rendering the same functions, are available for the skilled person.

Each one of the two light emitting assemblies has its components, i.e. LEDs, optical parts referred to in this example as collimating mirrors, and shields, gathered on a plate 7 acting as a support. The plate 7 has an upper face 8 receiving the components. The support keeps all the components in a fixed position relative to one another.

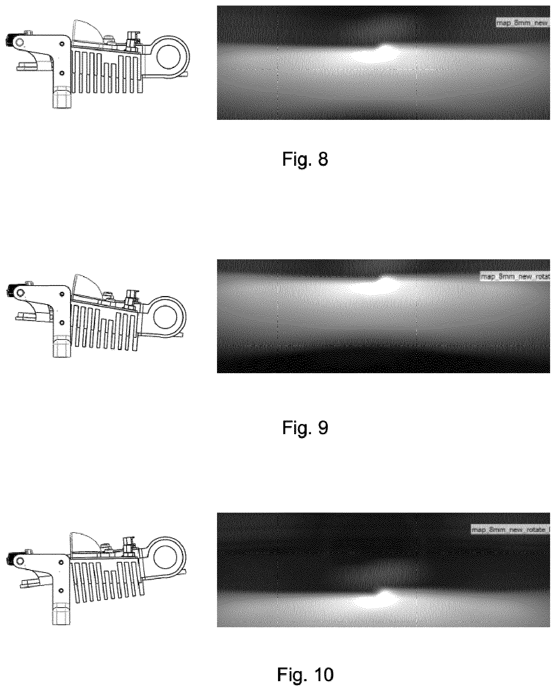

One of the light-emitting assemblies 3 is designed to emit a first beam, i.e. either a base beam 9 or a high beam (non-represented here), on the road, as shown in figures 8-12. In the embodiment shown, the first beam is a regular beam. The other one of the light-emitting assemblies 3 is designed to emit a second beam, in the present embodiment a kink beam 10, i.e. a beam with a step 11 between its left side and its right side and a significant differentiation of height between the left side and the right side. The purpose of such a kink beam 10 is to prevent blinding an opposite driver on the same road.

In this description, the adjective "kink" is used to qualify a component belonging to the light-emitting assembly emitting the kink beam 10, and the adjective "regular" is used to qualify a component belonging to the light-emitting assembly emitting the base beam 9 or high beam. Although the description uses the words "regular" and "kink" for the first and second beams, nothing should be interpreted as implicitly limiting the scope of the invention to a combination of a regular beam and a kink beam. Only explicit limitations should be considered.

Regular support 12 holds three LEDs 4, each surrounded by its collimating mirror (three regular collimating mirrors 5 in total) and associated with its shield (three regular shields 6 in total). Other electronic parts 13 are schematically represented. No detail is provided here thereabout.

Kink support 14 holds one single LED 4, one single king collimating mirror 5 and one single shield 6, as well as electronic parts 13 no detailed in this description.

Each one of regular support 12 and kink support 14 is glued to a heat sink 15 having parallel ribs 16 extending opposite the components. This well-known arrangement, which can include a non-represented external fan, is not described in more details.

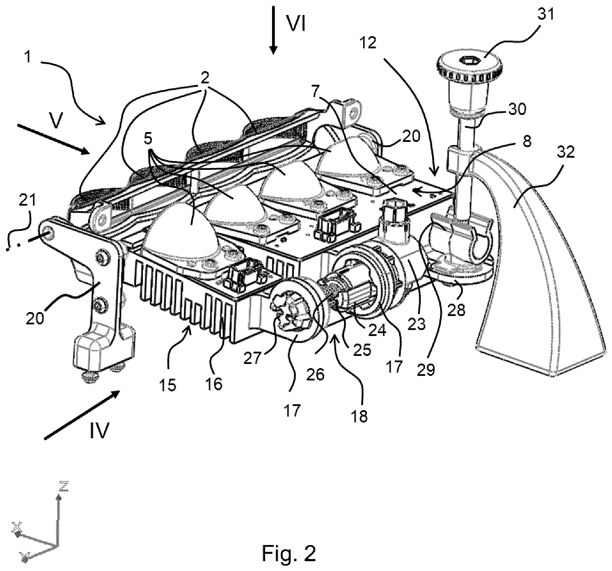

As one can see namely in figure 2, each heatsink 15 has a ring-shaped rear vertical extension 17. Said ring-shaped extensions 17 are connected by a mechanical link 18 whose first function is to keep said ring-shaped extensions 17 aligned, so that the upper faces 8 of the supports 14, 15 remain in a same plane.

The regular support 12 is fixedly mounted on a U-shaped bracket 19 located in the vicinity of the lenses 2. The U-shaped bracket 19 is rotatably mounted on lateral legs 20, around an axis of rotation 21 which is horizontal when the light unit 1 is mounted on a vehicle. Accordingly, the regular support 12 is able to rotate around a horizontal axis 21 relative to the lenses 2.

Kink support 14 has a front finger-shaped extension which is rotatably mounted on a finger-shaped extension of the U-shaped bracket 19, around an axis of rotation 22 which is vertical when the light unit 1 is mounted on a vehicle. Accordingly, kink support 14 is also able to rotate around the horizontal axis 21 relative to the lenses 2, together with regular support 12. Additionally, kink support 14 is able to rotate around the vertical axis 22 relative to regular support 12, while upper face 8 of the two supports remain in the same plane.

The angular setting of kink support 14 relative to regular support 12 is managed by mechanical link 18, whose second function is to set the distance between the two ring-shaped extension 17 of the supports. Mechanical link 18 is made of a stepper motor 23, affixed to the vertical extension 17 of the regular support 12, a rotating shaft 24 driven by the stepper motor 23 with a tapped hole 25, and an endless screw 26 screwed in the tapped hole 25 and connected by a non-rotating ball-joint connection 27 to the vertical extension 17 of the kink support 14.

Any other means for setting the distance between the two ring-shaped vertical extensions 17 could be used.

Regular support 12 also has a rear horizontal extension 28. Said horizontal extension 28 holds a ball-joint 29 connected to a vertical screw 30 which is manually pivotable thanks to a handle 31 relative to a fixed support 32. Fixed support 32 and lateral legs 20 are affixed to non-represented supporting pieces, such as parts of a box of a headlamp.

Thanks to this arrangement, the angular setting of the whole device is made possible by manually pivoting the vertical screw 30. This pivot rotates regular support 12 and kink support 14 together, i.e. all the components of the two light-emitting assemblies 3, relative to the lenses 2. This setting makes possible to adjust the height of the two beams.

The operation of stepper motor 23 provides the angular setting of kink support 14 relative to regular support 12. This operation makes possible to adjust the lateral position of the kink beam 10 in the left or right direction.

The rotation of light-emitting assemblies 3 around horizontal axis 21 is illustrated by figures 8, 9 and 10. One can see that the beams project on the road at a different height, depending on the angular position of the supports.

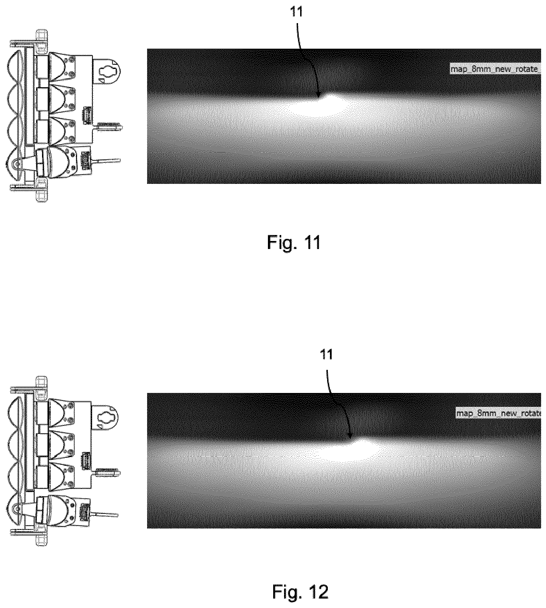

The rotation of kink support 14 relative to regular support 12 around the vertical axis 22 is illustrated by figures 11 and 12. One can see that the kink of the beam moves from left to right when kink support 14 is moved away from regular support 12 by operation of stepper motor 23.

The whole light unit 1 is compact, easy to set and compatible with disruptive designs, such as very slim headlamps with visible lenses 2 and no clearance around them.

### List of reference numbers used in the drawings

- light unit 1
- lenses 2
- light-emitting assemblies 3
- led 4
- collimating mirrors (optical parts) 5
- shields 6
- plate 7
- upper face 8
- base beam 9
- kink beam 10
- step 11
- regular support 12
- electronic parts 13
- kink support 14
- heat sink 15
- ribs 16
- vertical extension 17
- mechanical link 18
- bracket 19
- legs 20
- horizontal axis 21
- vertical axis 22
- stepper motor 23
- rotating shaft 24
- tapped hole 25
- endless screw 26
- non-rotating ball-joint connection 27
- horizontal extension 28
- ball-joint 29
- vertical screw 30
- handle 31
- fixed support 32

## Claims

1. Light unit (1) for a vehicle headlamp module, said light unit (1) comprising emitting means to emit a first beam (9) and a second beam (10), wherein said emitting means comprise, for each one of the first (9) and second (10) beams:
- a set of light emitting diodes (4) for generating a light,
- a set of optical parts (5) for collimating the light emitted by the light emitting diodes (4),
- a support (12, 14) for holding the set of light emitting diodes (4) and the set of optical parts (5), in a fixed position relative to one another,
and said emitting means also comprises:
- a set of focusing lenses (2) for converting the light into a first beam and a second beam (10), both aiming at an external target,
- a movable means for adjusting the vertical position of the supports (14, 15) relative to the set of focusing lens (2), the vertical direction being considered when the headlamp module is mounted on a vehicle,
**characterized in that** the support (14) of the second beam (10) is rotatable relative to the support (12) of the first beam (9), around an axis of rotation parallel to the vertical direction.

2. Light unit (1) according to claim 1, wherein at least one emitting means comprises a set of shields for filtering the light collimated by the optical parts, the set of shields being held on the support,

3. Light unit (1) according to any one of claims 1 and 2, wherein the first beam is a regular/base beam and the second beam is a kink beam.

4. Light unit (1) according to any one of claims 1 to 3, wherein the vertical axis (22) of rotation is located in the vicinity of the focusing lenses (2).

5. Light unit (1) according to any one of claims 1 to 4, wherein the support for the second beam (10) is provided with setting means for setting its angular position around the axis of rotation relative to the support for the first beam.

6. Light unit (1) according to claim 5, wherein the setting means is a screw, optionally combined with a stepper motor (23) or a servo motor.

7. Light unit (1) according to any one of claims 1 to 6, wherein the focusing lenses (2) for the second beam (10) and for the first beam are aligned along a horizontal direction, taken when the headlamp module is mounted on the vehicle.

8. Light unit (1) according to any one of claims 1 to 7, wherein the first beam is a base beam (9).

9. Light unit (1) according to any one of claims 1 to 8, wherein the second beam is a kink beam.

10. Light unit (1) according to any one of claims 1 to 9, wherein at least one of the supports comprises a heat sink (15), optionally combined with an air fan.

11. Light unit (1) according to any one of claims 1 to 10, wherein the set of focusing lenses (2) for the second beam (10) is constituted of one single lens.

12. Light unit (1) according to any one of claims 1 to 11, wherein the movable means comprise an axis of rotation parallel to a horizontal direction, taken when the headlamp module is mounted on the vehicle, said horizontal axis (21) of rotation being common to the support for the second beam (10) and to the support for the first beam.

13. Light unit (1) according to claim 12, wherein said horizontal axis (21) of rotation is located in the vicinity of the focusing lenses (2).

14. Light unit (1) according to any one of claims 12 and 13, wherein the support for the second beam (10) and the support for the first beam are mechanically linked to move as one piece around the horizontal rotation axis.

15. Light unit (1) according to claim 14, wherein one of the supports for the second beam (10) and for the first beam is provided with setting means such as a screw, optionally combined with a stepper motor (23) or a servo motor, for setting its angular position around the horizontal rotation axis.
